# EUROPÄISCHE PATENTSCHRIFT

(11) **EP 3 642 060 B1**
(45) Veröffentlichungstag und Bekanntmachung des Hinweises auf die Patenterteilung: **03.11.2021**
(21) Anmeldenummer: 18726408.0
(22) Anmeldetag: 16.05.2018
(51) Int. Cl.: B60G 7/00, F16C 11/06

(54) **VERFAHREN ZUR HERSTELLUNG EINES FAHRZEUGBAUTEILS UND FAHRZEUGBAUTEIL HERGESTELLT NACH DIESEM VERFAHREN**
METHOD FOR PRODUCING A VEHICLE COMPONENT, AND VEHICLE COMPONENT PRODUCED ACCORDING TO SAID METHOD
PROCÉDÉ DE FABRICATION D'UNE PIÈCE DE VÉHICULE ET PIÈCE DE VÉHICULE FABRIQUÉE SELON CE PROCÉDÉ

(30) Priorität: 19.06.2017 DE 102017210212
(43) Veröffentlichungstag der Anmeldung: 29.04.2020
(73) Patentinhaber: ZF Friedrichshafen AG, 88046 Friedrichshafen (DE)
(72) Erfinder: AHLBRAND, Marcel, 49152 Bad Essen (DE); EULERICH, Wolfgang, 49086 Osnabrück (DE)
(74) Vertreter: ZF Friedrichshafen AG
(86) Internationale Anmeldenummer: PCT/EP2018/062672
(87) Internationale Veröffentlichungsnummer: WO 2018/233941

(56) Entgegenhaltungen:
- CN-U- 205 298 248
- DE-A1- 10 206 622
- DE-A1-102005 025 551
- DE-A1-102006 008 252
- DE-A1-102010 043 040
- DE-A1-102011 108 881
- DE-A1-102015 202 092
- DE-A1-102015 207 176
- DE-U1-202010 000 258
- DE-U1-202015 100 906
- US-A- 4 283 833
- US-A- 6 076 247

## Beschreibung

Die Erfindung betrifft ein Verfahren zur Herstellung eines Fahrzeugbauteils, bei dem ein Gelenkgehäuse in eine vorgegebene Einsetzrichtung in ein Durchgangsloch eines Strukturbauteils eingesetzt wird, wobei das Einsetzen des Gelenkgehäuses in das Durchgangsloch in Einsetzrichtung beendet wird, wenn ein Anschlagselement des Gelenkgehäuses an dem Strukturbauteil anliegt, nach dem Einsetzen wird das Gelenkgehäuse mit dem Strukturbauteil stoffschlüssig verbunden, wobei das Gelenkgehäuse mit seinem Gehäuseboden voran in das Durchgangsloch eingesetzt wird, und das Gelenkgehäuse und das Strukturbauteil mit mindestens einer Richtungskomponente entgegen der Einsetzrichtung stoffschlüssig miteinander verschweißt werden, wobei das Gelenkgehäuse und das Strukturbauteil ausgehend von einer von dem Anschlagselement abgewandten Seite des Strukturbauteils in Richtung des Anschlagselementes miteinander stoffschlüssig verbunden werden. Des Weiteren betrifft die Erfindung ein nach dem erfindungsgemäßen Verfahren hergestelltes Fahrzeugbauteil.

Ein derartiges Verfahren bzw. Fahrzeugbauteil ist aus der DE 20 2010 000258 U1 oder US 4 283 833 A bekannt.

Aus der DE 10 2015 202092 A1 oder US 6 076 247 A ist die Sicherung des Gelenkgehäuses am Strukturbauteil mittels einer plastischen Umformung des Gelenkgehäuses bekannt.

Aus der DE 10 2011 108 881 A1 ist bekannt, dass nach dem Einsetzen eine Blechfalte zum Realisieren eines Formschlusses zwischen dem Gelenkgehäuse und dem Strukturbauteil umgeformt wird. Diese formschlüssige Verbindung kann anschließend mit einer stoffschlüssigen Verbindung, beispielsweise einer Schweiß- oder Klebeverbindung, kombiniert werden.

Der DE 10 2015 207 176 A1 ist ein Gelenkgehäuse zu entnehmen, dass mit der Gehäuseöffnung voran in das Durchgangsloch eingesetzt wird. Hierbei kommt es zu einer Linienberührung zwischen dem Gelenkgehäuse und dem Strukturbauteil, wobei das Gelenkgehäuse und das Strukturbauteil im Bereich der Linienberührung mittels einer Widerstandsschweißung stoffschlüssig miteinander verbunden werden.

Aus der DE 10 2010 043 040 A1 ist bekannt, dass ein an seiner Außenseite vorbeschichtetes Strukturbauteil mit einer an ihrer Außenseite vorbeschichteten und zu einem Gelenk vormontierten Gelenkkartusche durch ein stoffschlüssiges Fügeverfahren dauerhaft fest verbunden wird. Die Vorbeschichtungen der Gelenkkartusche und des Strukturbauteils müssen vor der Durchführung des stoffschlüssigen Fügeverfahrens zumindest bereichsweise entfernt werden, um Fehler in der stoffschlüssigen Verbindung zu vermeiden. Hierbei ist von Nachteil, dass die Entfernung der Beschichtung im Bereich der stoffschlüssigen Verbindung zu einem erhöhten Aufwand führt. Des Weiteren kann das Durchgangsloch in dem Strukturbauteil zur Aufnahme der Gelenkkartusche nicht durch Stanzen eingebracht werden, da hierdurch sonst die Wirksamkeit des bereits aufgebrachten Korrosionsschutzes des Strukturbauteils durch Beschädigung der Oberflächenbeschichtung beeinträchtigt werden könnte. Daher muss die Aufnahme bzw. das Durchgangsloch für die Gelenkkartusche mittels eines Laserschneidprozesses hergestellt werden, was einen zusätzlichen Aufwand und zusätzliche Kosten verursacht. Des Weiteren ist von Nachteil, dass auf einer Bundseite der Gelenkkartusche ein Spalt zwischen der Gelenkkartusche und dem aufnehmenden Strukturbauteil entstehen kann. Dieser Spalt birgt die Gefahr einer Spaltkorrosion, insbesondere im Bereich einer Schweißnahtwurzel.

Aus der noch unveröffentlichten deutschen Patentanmeldung Nr. 10 2016 208 579.4 ist die Integration eines Gelenkgehäuses in ein Strukturbauteil mittels einer doppelseitigen Verschweißung bekannt. Die zweiseitige Verschweißung führt jedoch zu erheblichen Mehrkosten für die hierfür nötige Anlagentechnik sowie zu einer unerwünschten Erhöhung der Taktzeit in der serienmäßigen Herstellung des Fahrzeugbauteils. Des Weiteren ist von Nachteil, dass aufgrund der hohen Härten in den Schweißnähten kein hinreichend günstiger Oberflächenschutz, insbesondere eine galvanische Beschichtung, zum Einsatz kommen kann, da ansonsten die Gefahr der Wasserstoffversprödung besteht. Zusammen mit der längeren Taktzeit für das doppelseitige Schweißen führt dies insgesamt zu unerwünschten hohen Herstellungskosten. Des Weiteren ist nachteilig, dass das Gelenkgehäuse im Kaltfließprozess hergestellt wird, was aufgrund der erforderlichen Toleranzen für den Schweißprozess aufwändig ist und somit einen unerwünschten zusätzlichen Aufwand verursacht. Zudem müssen oftmals derartige Kaltfließpressteile nachträglich im Bereich einer Balghaltenut zerspant werden.

Es ist die der Erfindung zu Grunde liegende Aufgabe, ein Verfahren und ein Fahrzeugbauteil der eingangs genannten Art derart weiterzuentwickeln, dass der Aufwand und/oder die Herstellungskosten reduziert werden können. Insbesondere soll eine alternative Ausführungsform bereitgestellt werden.

Die der Erfindung zu Grunde liegende Aufgabe wird mit einem Verfahren nach Anspruch 1 und mittels eines Fahrzeugbauteils nach Anspruch 10 gelöst. Bevorzugte Weiterbildungen der Erfindung finden sich in den Unteransprüchen und in der nachfolgenden Beschreibung.

Das Verfahren zur Herstellung eines Fahrzeugbauteils umfasst die Verfahrensschritte: Einsetzen eines, insbesondere zumindest einseitig offenen, Gelenkgehäuses in eine vorgegebene Einsetzrichtung in ein Durchgangsloch eines Strukturbauteils; Beenden des Einsetzens des Gelenkgehäuses in das Durchgangsloch in Einsetzrichtung, sobald ein Anschlagselement des Gelenkgehäuses an dem Strukturbauteil anliegt; sowie ein stoffschlüssiges Verbinden des Gelenkgehäuses mit dem Strukturbauteil nach dem Einsetzen. Beim Einsetzen in das Durchgangsloch wird das Gelenkgehäuse mit seinem Gehäuseboden voran in das Durchgangsloch eingeführt.

Hierbei ist von Vorteil, dass aufgrund des Einsetzens des Gelenkgehäuses in Einsetzrichtung mit dem Gehäuseboden des Gelenkgehäuses voran das Anschlagselement auf der von dem Gehäuseboden abgewandten Seite des Strukturbauteils zu liegen kommt bzw. anschlägt. Insbesondere ist beim Einsetzen des Gelenkgehäuses mit dem Gehäuseboden voran eine Gehäuseöffnung von dem Durchgangsloch abgewandt. Die erfindungsgemäße Lösung ermöglicht in Kombination mit dem vorgesehenen stoffschlüssigen Verbinden des Gelenkgehäuses mit dem Strukturbauteil die Bereitstellung eines kostengünstigen Herstellungsverfahrens bzw. Fahrzeugbauteils.

Vorzugsweise erfolgt ein Beschichten des Gelenkgehäuses und/oder des Strukturbauteils nach dem stoffschlüssigen Verbinden des Gelenkgehäuses mit dem Strukturbauteil. Somit können das Gelenkgehäuse und das Strukturbauteil in einem unbeschichteten Zustand stoffschlüssig miteinander verbunden werden. Insbesondere wird ein Gelenk in dem Gelenkgehäuse montiert. Vorzugsweise erfolgt das Montieren des Gelenks nach dem stoffschlüssigen Verbinden und/oder nach dem Beschichten. Beim Montieren des Gelenks kann ein ein Lagerbereich aufweisendes Gelenkinnenteil in das Gelenkgehäuse eingesetzt werden. Anschließend kann das Gelenkgehäuse verschlossen werden. Vorzugsweise ist der Lagerbereich des Gelenkinnenteils aufgrund des Verschließens des Gelenkgehäuses in dem Gelenkgehäuse eingeschlossen, wobei sich das Gelenkinnenteil aus dem Gelenkgehäuse, insbesondere durch eine Gehäuseöffnung des Gelenkgehäuses, heraus erstreckt. Das Verschließen des Gelenkgehäuses kann aufgrund eines Umformens und/oder Einrollens eines Gehäuserandes des Gelenkgehäuses realisiert sein.

Nach dem stoffschlüssigen Verbinden kann eine Wärmebehandlung erfolgen. Insbesondere wird mittels der Wärmebehandlung eine Härte der stoffschlüssigen Verbindung reduziert. Hierdurch können nachfolgend, insbesondere übliche bzw. konventionelle, galvanische Beschichtungen, vorzugsweise ZnFi- oder ZnNi-Beschichtungen, auf das Fahrzeugbauteil und/oder die stoffschlüssige Verbindung aufgebracht werden. Hierdurch lässt sich ein kostengünstiger Korrosionsschutz realisieren.

Vorzugsweise weist das Gelenkgehäuse und/oder das Gelenk eine Mittellängsachse, Gelenkachse und/oder Axialachse auf. Das Gelenk und/oder das Gelenkinnenteil kann um eine solche Achse bewegbar gelagert sein. Vorzugsweise erstreckt sich die Mittellängsachse in axialer Richtung des Gelenkgehäuses. Eine Gelenkachse des Gelenkinnenteils und die Mittellängsachse des Gelenkgehäuses können zusammenfallen. Insbesondere ist das Gelenkgehäuse, das Gelenk und/oder das Gelenkinnenteil bezüglich der Mittellängsachse rotationssymmetrisch oder im Wesentlichen rotationssymmetrisch ausgebildet. Die Mittellängsachse und/oder die Gelenkachse kann durch einen Mittelpunkt des, insbesondere kugelartigen oder kugelförmigen, Lagerbereichs des Gelenkinnenteils verlaufen.

Das Fahrzeugbauteil kann ein Gelenk aufweisen. Dieses Gelenk kann als ein Kugelgelenk realisiert sein. Insbesondere ist das Gelenk ein Radführungsgelenk. Vorzugsweise wird das Gelenkinnenteil mit seinem Lagerbereich gleitfähig und/oder gelenkig in dem Gelenkgehäuse gelagert. Insbesondere ist das Gelenkinnenteil ein Kugelzapfen, wobei der Lagerbereich des Gelenkinnenteils als eine Gelenkkugel ausgebildet ist. Vorzugsweise ist das Gelenkinnenteil aus Metall hergestellt. Das Gelenkinnenteil kann als ein Gelenkzapfen und/oder Kugelzapfen ausgebildet sein.

Vorzugsweise verläuft die Einsetzrichtung, insbesondere während und/oder nach dem Einsetzen des Gelenkgehäuses in das Durchgangsloch, in Richtung einer Gehäuseachse und/oder Mittellängsachse des Gelenkgehäuses. Insbesondere verläuft die Einsetzrichtung in Richtung einer Lochachse des Durchgangslochs.

Im Rahmen der vorliegenden Anmeldung kann der Ausdruck "radial" eine oder jedwede Richtung kennzeichnen, die rechtwinklig zur axialen Richtung des Gelenkgehäuses, des Gelenks, der Gelenkachse und/oder der Mittellängsachse verläuft. Insbesondere ist das Gelenkinnenteil drehbar und/oder kippbar in dem Gelenkgehäuse und/oder einer Lagerschale gelagert. Die Lagerschale kann vor dem Montieren des Gelenkinnenteils in dem Gelenkgehäuse durch das Durchgangsloch in das Gelenkgehäuse eingesetzt werden. Insbesondere ist die Lagerschale aus einem Kunststoff gebildet.

Vorzugsweise wird unter "Kippen" oder "Verkippen" des Gelenkinnenteils eine Bewegung des Gelenkinnenteils relativ zu dem Gelenkgehäuse verstanden, bei welcher eine Veränderung eines zwischen einer Gelenkinnenteillängsachse und einer Gehäuselängsachse eingeschlossenen Winkels eintritt. Bevorzugt erfolgt das Kippen oder Verkippen um den Mittelpunkt des Lagerbereichs des Gelenkinnenteils. Ein Kippwinkel des Gelenkinnenteils ist insbesondere ein zwischen der Gelenkinnenteillängsachse und der Gehäuselängsachse eingeschlossener Winkel. In der nicht gekippten Lage des Gelenkinnenteils ist der Kippwinkel vorzugsweise Null und/oder die Gelenkinnenteillängsachse fällt mit der Gehäuselängsachse zusammen. Insbesondere entspricht die Gehäuselängsachse der Mittellängsachse des Gelenkgehäuses. Insbesondere wird unter "Drehen" oder "Verdrehen" des Gelenkinnenteils eine Bewegung des Gelenkinnenteils verstanden, bei welcher das Gelenkinnenteil relativ zu dem Gelenkgehäuse um die Gelenkinnenteillängsachse gedreht wird.

Unter einem Durchgangsloch kann im Sinne der Erfindung eine runde oder unrunde, das Strukturbauteil durchdringende Öffnung oder Ausnehmung verstanden werden. Vorzugsweise ist das Durchgangsloch kreisrund oder kreisförmig ausgebildet. Das Durchgangsloch wird vorzugsweise vollständig umlaufend von dem Strukturbauteil umschlossen. Insbesondere weist das Durchgangsloch einen Rand auf. Unter einem Rand des Durchgangslochs kann im Zusammenhang mit der Erfindung eine Schnittlinie verstanden werden, die aus der Innenwandung des Durchgangslochs und einer der beiden großen Oberflächen und/oder Seiten des Strukturbauteils, die um das Maß der Materialstärke des Strukturbauteils voneinander beabstandet sind, gebildet wird.

Das Gelenkgehäuse und das Strukturbauteil werden mit mindestens einer Richtungskomponente entgegen der Einsetzrichtung stoffschlüssig miteinander gefügt. Hierbei ist das Fügen mittels Verschweißen realisiert. Somit kann eine Fügerichtung zum stoffschlüssigen Fügen mindestens eine Richtungskomponente aufweisen, die der Einsetzrichtung zum Einsetzen des Gelenkgehäuses in das Durchgangsloch entgegen gerichtet ist. Hierdurch kann eine vollständige oder mindestens teilweise Überlagerung der Einsetzrichtung und der Fügerichtung vermieden werden, wodurch die Realisierung einer entsprechenden Anlagentechnik für die Serienproduktion vereinfacht ist. Das Gelenkgehäuse und das Strukturbauteil werden, insbesondere ausschließlich, ausgehend von einer von dem Anschlagselement abgewandten Seite des Strukturbauteils in Richtung des Anschlagselementes miteinander stoffschlüssig verbunden. Somit kann das Strukturbauteil eine erste Seite aufweisen, auf der das Anschlagselement vollständig oder mindestens teilweise anliegt. Des Weiteren kann das Strukturbauteil eine von der ersten Seite abgewandte zweite Seite aufweisen. Diese zweite Seite ist von dem Anschlagselement abgewandt. Insbesondere erfolgt das stoffschlüssige Verbinden des Gelenkgehäuses mit dem Strukturbauteil ausgehend von der zweiten Seite des Strukturbauteils. Hierbei erstreckt sich das stoffschlüssige Verbinden und/oder die Fügerichtung ausgehend von der zweiten Seite in Richtung der ersten Seite und/oder in Richtung des Anschlagselements.

Vorzugsweise werden das Gelenkgehäuse und das Strukturbauteil mit einer stoffschlüssigen Verbindung miteinander gefügt, wobei sich die stoffschlüssige Verbindung, insbesondere eine Schweißnaht, ausgehend von einer von dem Anschlagselement abgewandten Seite des Strukturbauteils bis in das Anschlagselement hinein erstreckt. Hierdurch kann die Bildung eines Spaltes und/oder einer Spaltkorrosion zuverlässig vermieden werden. Insbesondere liegt eine Schweißnahtwurzel im Bereich des Anschlagselements.

Vorzugsweise wird ein Kontaktbereich des Gelenkgehäuses mit dem Strukturbauteil vollständig stoffschlüssig gefügt. Insbesondere werden das Gelenkgehäuse und das Strukturbauteil im Kontaktbereich vollständig miteinander verschweißt. Insbesondere weist der Kontaktbereich sämtliche Flächen des Gelenkgehäuses und des Strukturbauteils auf, die sich nach dem Einsetzen des Gelenkgehäuses in das Durchgangsloch berühren oder aneinander liegen. Das Gelenkgehäuse und das Strukturbauteil können mittels einer einseitig hergestellten stoffschlüssigen Verbindung miteinander gefügt werden. Insbesondere bedeutet hierbei "einseitig", dass die stoffschlüssige Verbindung ausschließlich von der von dem Anschlagselement abgewandten Seite des Strukturbauteils ausgehend eingebracht wird. Hierbei kann die stoffschlüssige Verbindung so gestaltet sein, dass der gesamte Kontaktbereich und/oder die gesamte für die Verbindung zur Verfügung stehende Fläche der zu fügenden Bauteile miteinander, insbesondere aufgrund einer Durchschweißung, verbunden werden.

Gemäß einer Weiterbildung wird die stoffschlüssige Verbindung zwischen dem Gelenkgehäuse und dem Strukturbauteil mittels eines Strahlschweißverfahrens, insbesondere mittels Laserschweißen, hergestellt. Das stoffschlüssige Fügen kann durch Schweißen oder Schmelzschweißen realisiert sein. Ein Strahlschweißen oder Laserschweißen ist von Vorteil, da hierdurch eine saubere Schweißung ohne Zusatzwerkstoffe und ohne Bildung von Schlacke möglich ist. Insbesondere muss die Schweißnaht für eine eventuelle Oberflächenbehandlung als Korrosionsschutz nicht mechanisch nachgearbeitet werden. Ein Spalt im Fügebereich und/oder Kontaktbereich kann aufgrund eines Schmelzschweißens vermieden werden, da ein eventuell nach dem Fügen noch vorhandener Luftspalt oder Fügespalt mittels Schmelze aufgefüllt werden kann. Somit ist nach dem Schweißen bzw. Fügen kein Spalt mehr vorhanden, wodurch eine Spaltkorrosion vermeidbar ist.

Nach einer weiteren Ausführungsform wird das Anschlagselement vor dem Einsetzen des Gelenkgehäuses als eine von einer Außenseite des Gelenkgehäuses nach außen vorstehende Stufe ausgebildet. Eine derartige Stufe ist auf einfache und kostengünstige Weise, insbesondere mittels Umformen, herstellbar. Insbesondere umläuft das Anschlagselement das Gelenkgehäuse. Vorzugsweise ist das Anschlagselement einstückig mit dem Gelenkgehäuse ausgebildet. Das Anschlagselement kann das Gelenkgehäuse radial zu einer Mittellängsachse, insbesondere einer Mittellängsachse des Gelenkgehäuses, umlaufen. Somit kann das Anschlagselement und/oder die Stufe ringartig oder bundartig ausgebildet sein.

Gemäß einer Weiterbildung wird das Gelenkgehäuse beim Einsetzen in das Durchgangsloch eingepresst. Somit kann aufgrund des Einsetzens des Gelenkgehäuses in das Durchgangsloch ein Presssitz zwischen dem Gelenkgehäuse und dem Strukturbauteil realisiert werden. Zur Realisierung des Einpressens bzw. des Presssitzes weist der Außendurchmesser des Gelenkgehäuses mindestens im Kontaktbereich des Gelenkgehäuses mit dem Strukturbauteil und/oder einem Rand des Durchgangsloches einen Außendurchmesser auf, der größer ist als der Innendurchmesser des Durchgangslochs. Hierdurch ist ein Übermaß realisiert, der das Einpressen bzw. den Presssitz ermöglicht.

Erfindungsgemäß wird nach dem Einsetzen des Gelenkgehäuses in das Durchgangsloch und nach dem stoffschlüssigen Verbinden des Gelenkgehäuses mit dem Strukturbauteil ein Sicherungselement zum zusätzlichen Sichern des Gelenkgehäuses an dem Strukturbauteil an der Außenseite des Gelenkgehäuses hergestellt. Insbesondere ist das Sicherungselement einstückig mit dem Gelenkgehäuse ausgebildet. Selbst bei einem Versagen der stoffschlüssigen Verbindung des Gelenkgehäuses mit dem Strukturbauteil und/oder einem Bruch einer entsprechenden Schweißnaht kann mittels des Sicherungselementes die Gefahr eines unerwünschten vollständigen Ablösens des Gelenkgehäuses von dem Strukturbauteil reduziert werden. Vorzugsweise wird nach dem Einsetzen des Gelenkgehäuses in das Durchgangsloch zunächst die stoffschlüssige Verbindung hergestellt und erst nach dem Fertigstellen der stoffschlüssigen Verbindung das Sicherungselement hergestellt. Hierdurch ist eine hinreichende Zugänglichkeit für das Herstellen der stoffschlüssigen Verbindung gegeben. Würde man gemäß einer alternativ denkbaren Ausführungsform nach dem Einsetzen des Gelenkgehäuses in das Durchgangsloch zunächst das Sicherungselement herstellen, könnte das Sicherungselement eine Zugänglichkeit für ein nachfolgendes Herstellen der stoffschlüssigen Verbindung erschweren.

Das Sicherungselement wird erfindungsgemäß im Bereich einer von dem Anschlagselement abgewandten Seite des Strukturbauteils angeordnet. Aufgrund des Zusammenwirkens des Anschlagselementes und des Sicherungselementes kann das Gelenkgehäuse formschlüssig an dem Strukturbauteil gehalten und/oder gesichert sein. Insbesondere wird das Strukturbauteil zwischen dem Anschlagselement und dem Sicherungselement geklemmt.

Das Sicherungselement ist erfindungsgemäß als ein von einer Außenseite des Gelenkgehäuses nach außen vorstehender Vorsprung ausgebildet und/oder kann insbesondere als Wulst ausgebildet sein. Das Sicherungselement kann das Gelenkgehäuse umlaufen und/oder ringartig ausgebildet sein. Vorzugsweise umläuft das Sicherungselement das Gelenkgehäuse radial zu einer Mittellängsachse, insbesondere einer Mittellängsachse des Gelenkgehäuses. Das Anschlagselement und das Sicherungselement können mit einem Abstand voneinander beabstandet sein, der der Dicke des Strukturbauteils im Bereich des Durchgangslochs entspricht oder im Wesentlichen entspricht. Das Sicherungselement kann mittels Umformen eines Bereiches der Außenseite des Gelenkgehäuses hergestellt werden. Insbesondere ist das Sicherungselement als ein angestauchter Hinterschnitt realisiert.

Nach einer weiteren Ausführungsform wird eine Haltenut zum Anordnen eines Randes eines Dichtungsbalgs zwischen einerseits dem Anschlagselement und/oder einer an dem Anschlagselement anliegenden Seite des Strukturbauteils und andererseits einem vorstehenden Gehäuserand des Gelenkgehäuses gebildet. Vorzugsweise umläuft der Gehäuserand eine Gehäuseöffnung des Gelenkgehäuses. Insbesondere steht der Gehäuserand radial im Bezug zu einer Mittellängsachse, vorzugsweise des Gelenkgehäuses, vor. Insbesondere ist von Vorteil, dass die Haltenut von der stoffschlüssigen Verbindung des Gelenkgehäuses mit dem Strukturbauteil unbeeinflusst ist. Vorzugsweise wird die stoffschlüssige Verbindung von der von der Haltenut abgewandten Seite aus in den Kontaktbereich des Gelenkgehäuses mit dem Strukturbauteil eingebracht. Hierdurch kann eine hinreichend saubere, unbeeinflusste und/oder reproduzierbare Haltenut zum Anordnen des Randes des Dichtungsbalgs bereitgestellt werden.

Insbesondere kommt dem Dichtungsbalg die Funktion zu, einen Gelenkbereich des Gelenks gegenüber äußeren Umwelteinflüssen, wie beispielsweise Verunreinigungen, Feuchtigkeit, mechanischen Einflüssen und dergleichen zu schützen. Hierbei kann der Dichtungsbalg als ein Reservoir für Gelenkfett dienen. Das Gelenkfett kann eine Dauerschmierung ermöglichen, um die Reibung zwischen den relativ zueinander beweglichen Bauteilen zu reduzieren. Der Dichtungsbalg kann aus einem flexiblen, insbesondere elastischen, Material oder Elastomer, als schlauchähnlicher Hohlkörper mit zwei offenen Enden ausgebildet sein. Hierbei weist der Dichtungsbalg an einem dem Gelenkgehäuse zugewandten axialen Ende einen gehäuseseitigen Rand oder Randabschnitt sowie an einem gegenüberliegenden, dem Gelenkinnenteil zugewandten Ende einen gelenkinnenteilseitigen oder zapfenseitigen Rand oder Randabschnitt auf. Der Dichtungsbalg kann einen Mantel aufweisen, der sich zwischen den Rändern des Dichtungsbalgs erstreckt. Der Mantel kann dabei prinzipiell unterschiedlich ausgebildet sein, wobei zur Gewährleistung der Gelenkbeweglichkeit eine Kontur gewählt werden kann, die sowohl stauchbar als auch streckbar ist, wie beispielsweise eine bauchige Kontur und/oder eine mit Falten versehene Kontur. Im letzteren Fall spricht man von einem sogenannten Faltenbalg, bei Vorhandensein mehrerer Falten spezieller von einem Mehrfaltenbalg.

Das erfindungsgemäße Fahrzeugbauteil ist mittels des erfindungsgemäßen Verfahrens hergestellt. Insbesondere erstreckt sich die stoffschlüssige Verbindung zwischen dem Gelenkgehäuse und dem Strukturbauteil über den gesamten Kontaktbereich zwischen dem Gelenkgehäuse und dem Strukturbauteil bis in das Anschlagselement hinein. Hierdurch ist die Bildung eines Spaltes und/oder einer Spaltkorrosion zuverlässig vermieden. Insbesondere ist die stoffschlüssige Verbindung als eine einseitig hergestellte bzw. eingebrachte Schweißnaht realisiert. Vorzugsweise erstreckt sich die Schweißnaht ausgehend von der von dem Anschlagselement abgewandten Seite des Strukturbauteils in Richtung des Anschlagselementes und in dieses hinein. Somit kann eine Schweißnahtwurzel im Bereich des Anschlagselementes angeordnet sein.

Das Durchgangsloch kann zylindrisch ausgebildet sein. Entsprechend kann ein in dem Durchgangsloch anzuordnender Kontaktbereich und/oder Verbindungsbereich der Außenumfangsfläche des Gelenkgehäuses als ein zylindrischer Bereich ausgebildet sein. Das Durchgangsloch des Strukturbauteils kann mittels Stanzen oder Lochstanzen oder Bohren in das Strukturbauteil eingebracht werden. Vorzugsweise wird das Gelenkgehäuse, insbesondere vor seinem Einsetzen in das Durchgangsloch, bereitgestellt und/oder hergestellt. Das Gelenkgehäuse kann aus einem Metall gebildet sein. Die Außenumfangsfläche des Gelenkgehäuses kann zylindrisch oder im Wesentlichen zylindrisch ausgebildet sein. Insbesondere ist das Gelenkgehäuse topfförmig oder topfartig ausgebildet. Das Gelenkgehäuse kann aus einem Blech und/oder aus Vollmaterial hergestellt werden. Insbesondere ist das Gelenkgehäuse als ein tiefgezogenes Blechteil ausgebildet. Hierbei kann das Rohmaterial des Gelenkgehäuses der Güte des Gelenks entsprechen. Alternativ kann das Gelenkgehäuse mittels einer Massivumformung, insbesondere Kaltfließpressen, Warmfließpressen und/oder Schmieden, hergestellt werden. Des Weiteren kann das Gelenkgehäuse als ein zerspantes Bauteil aus Vollmaterial hergestellt sein oder zumindest einen Zerspanungsanteil aufweisen.

Bevorzugt weist das Gelenkgehäuse eine Gehäuseöffnung auf, durch welche hindurch sich das Gelenkinnenteil aus dem Gelenkgehäuse des montierten Gelenks heraus erstreckt. Das Gelenkgehäuse weist einen Gehäuseboden auf, der vorzugsweise der Gehäuseöffnung, insbesondere in Richtung der Mittellängsachse des Gelenkgehäuses, gegenüberliegt. Eine Außenseite des Gehäusebodens ist von der Gehäuseöffnung abgewandt. Beim Einsetzen des Gelenkgehäuses in das Durchgangsloch wird das Gelenkgehäuse mit der Außenseite des Gehäusebodens voran in das Durchgangsloch eingeführt. Der Gehäuseboden kann einstückig mit dem Gelenkgehäuse oder als ein mit dem Gelenkgehäuse verbundener Deckel ausgebildet sein.

Vorzugsweise ist das Gelenkgehäuse dadurch verschlossen, dass der Gehäuserand der Gehäuseöffnung nach innen umgebogen ist und/oder dass ein, vorzugsweise ringförmiger, Einsatz in die Gehäuseöffnung eingesetzt ist. Beispielsweise wird durch das Umbiegen und/oder Einrollen des Gehäuserandes das Gelenkinnenteil, insbesondere ein Lagerbereich des Gelenkinnenteils, innerhalb des Gelenkgehäuses gehalten.

Das Strukturbauteil kann aus Metall hergestellt sein. Insbesondere wird das Strukturbauteil aus Blech hergestellt. Das Strukturbauteil kann einen Flansch bilden. Im Rahmen der vorliegenden Erfindung kann unter einem Strukturbauteil ein flächenhaftes Metallblechteil verstanden werden, welches beispielsweise gekrümmt, teilweise gekrümmt oder eben oder teilweise eben ausgebildet ist. Insbesondere bedeutet flächenhaft, dass die Materialstärke des Strukturbauteils deutlich geringer ist als die übrigen Abmessungen des Strukturbauteils. Vorzugsweise ist die Materialstärke konstant über die flächenhafte Erstreckung des Strukturbauteils. Des Weiteren kann das Strukturbauteil aus einem einzigen Blech und/oder aus mehreren Blechzuschnitten zusammengesetzt sein. Hierbei können die mehreren Blechzuschnitte durch stoffschlüssiges Fügen miteinander verbunden oder auf sonstige Weise formschlüssig miteinander verbunden sein.

Vorzugsweise weist das Gelenkgehäuse im Bereich der Stufe einen Außenumfang, insbesondere quer- oder rechtwinklig zur Mittellängsachse und/oder zur Einsetzrichtung auf, der größer ist als der Innendurchmesser des Durchgangslochs. Mittels des Anschlagselements wird das Gelenkgehäuse in Einsetzrichtung formschlüssig an dem Strukturbauteil gesichert. Insbesondere ist das Anschlagselement nach dem Einsetzen des Gelenkgehäuses in das Durchgangslochs außerhalb des Durchgangslochs angeordnet.

Insbesondere ist das Fahrzeugbauteil als ein Fahrwerkbauteil ausgebildet. Somit kann das Fahrzeugbauteil in ein Fahrwerk eines Fahrzeugs oder Kraftfahrzeugs eingebaut werden. Vorzugsweise wird das Gelenkinnenteil mit einer Fahrzeugkomponente oder Fahrwerkkomponente verbunden und/oder das Strukturbauteil wird mit einer weiteren Fahrzeugkomponente und/oder Fahrwerkkomponente verbunden. Bei dem Fahrzeugbauteil und/oder Fahrwerkbauteil kann es sich um ein Flanschgelenk, Radführungsgelenk, Einpressgelenk, Querlenker, Längslenker, Zugstrebe, Druckstrebe, Schräglenker, Federlenker oder um eine Spurstange handeln. Das Fahrzeugbauteil kann als ein Zweipunktlenker, Dreipunktlenker, Vierpunktlenker oder Mehrpunktlenker ausgebildet sein. Insbesondere kann das Strukturbauteil als ein Mehrpunktlenker, Stablenker, Spurstange, Hilfsrahmen, Schwenklager oder Radträger ausgebildet sein.

Insbesondere handelt es sich bei dem gemäß dem erfindungsgemäßen Verfahren hergestellten Fahrzeugbauteil um ein zuvor beschriebenes erfindungsgemäßes Fahrzeugbauteil. Vorzugsweise ist das Verfahren gemäß allen im Zusammenhang mit dem hier beschriebenen erfindungsgemäßen Fahrzeugbauteil erläuterten Ausgestaltungen weitergebildet. Ferner kann das hier beschriebene Fahrzeugbauteil gemäß allen im Zusammenhang mit den Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine geschnittene Seitenansicht eines Gelenkgehäuses für ein erfindungsgemäßen Verfahren bzw. Fahrzeugbauteil,
- Fig. 2: eine geschnittene Seitenansicht eines erfindungsgemäßen Fahrzeugbauteils mit dem Gelenkgehäuse gemäß Fig. 1,
- Fig. 3: ein Ausschnitt aus der geschnittenen Seitenansicht des erfindungsgemäßen Fahrzeugbauteils gemäß Fig. 2,
- Fig. 4: eine geschnittene Seitenansicht des erfindungsgemäßen Fahrzeugbauteils gemäß Fig. 2 und 3 sowie mit einem Gelenk, und
- Fig. 5: eine perspektivische Seitenansicht des erfindungsgemäßen Fahrzeugbauteils gemäß Fig. 2 und 3.

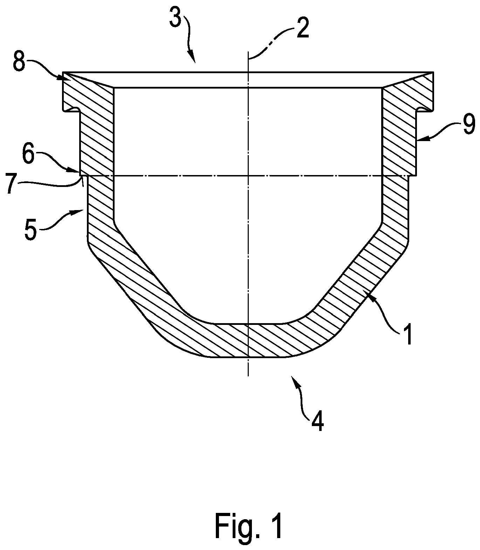

Figur 1 zeigt eine geschnittene Seitenansicht eines Gelenkgehäuses 1 für ein erfindungsgemäßes Verfahren bzw. Fahrzeugbauteil. Das Gelenkgehäuse 1 ist im Wesentlichen topfartig ausgebildet. Bei diesem Ausführungsbeispiel ist das Gelenkgehäuse 1 aus einem Metallblech sowie mittels eines Tiefziehverfahrens hergestellt. Das Gelenkgehäuse 1 weist eine Mittellängsachse 2 auf. Das Gelenkgehäuse 1 ist rotationssymmetrisch zu der Mittellängsachse 2 ausgebildet. Des Weiteren erstreckt sich das Gelenkgehäuse 1 in axialer Richtung der Mittellängsachse 2.

Das Gelenkgehäuse 1 hat eine Gehäuseöffnung 3. In Richtung der Mittellängsachse 2 und der Gehäuseöffnung 3 gegenüberliegend ist ein Gehäuseboden 4 angeordnet. Der Gehäuseboden 4 ist bei diesem Ausführungsbeispiel einstückig mit dem Gelenkgehäuse 1 ausgebildet.

Das Gelenkgehäuse 1 weist an seiner Außenumfangsfläche einen Kontaktbereich bzw. Verbindungsbereich 5 auf. Der Verbindungsbereich 5 ist bei diesem Ausführungsbeispiel zylindrisch ausgebildet. Der Verbindungsbereich 5 ist zum Kontaktieren eines korrespondierend zu dem Verbindungsbereich 5 ausgebildeten Randes eines Durchgangslochs eines hier nicht näher dargestellten Strukturbauteils ausgebildet.

Des Weiteren weist das Gelenkgehäuse 1 ein Anschlagselement 6 auf. Das Anschlagselement 6 ist bei diesem Ausführungsbeispiel als eine radial in Bezug zu der Mittellängsachse 2 nach außen vorstehende Stufe ausgebildet. Das Anschlagselement 6 weist eine sich rechtwinklig zur Mittellängsachse 2 erstreckende Anschlagsfläche 7 auf. Ausgehend von der Anschlagsfläche 7 erstreckt sich das Anschlagselement 6 in axialer Richtung der Mittellängsachse 2 in Richtung der Gehäuseöffnung 3. Somit weist das Gelenkgehäuse 1 im Verbindungsbereich 5 einen geringeren Außendurchmesser auf, als im Bereich des nach außen vorstehenden Anschlagselementes 6. Ausgehend von dem Verbindungsbereich 5 und in axialer Richtung der Mittellängsachse 2 in Richtung des Gehäusebodens 4 reduziert sich der Außendurchmesser des Gelenkgehäuses 1 aufgrund eines konusartigen oder trichterförmigen Bereichs des Gelenkgehäuses 1.

Die Gehäuseöffnung 3 ist von einem Gehäuserand 8 des Gelenkgehäuses 1 umgeben. Der Gehäuserand 8 steht radial bzw. rechtwinklig zur Mittellängsachse 2 nach außen vor. Somit weist das Gelenkgehäuse 1 im Bereich des Gehäuserandes 8 seinen maximalen Außendurchmesser auf. Der Gehäuserand 8 ist in axialer Richtung der Mittellängsachse 2 von dem Anschlagselement 6 beabstandet. Hierdurch ist zwischen dem Anschlagselement 6 und dem Gehäuserand 8 ein Haltenutabschnitt 9 gebildet. Der Außendurchmesser des Gelenkgehäuses 1 ist im Bereich des Haltenutabschnittes 9 kleiner als der Außendurchmesser im Bereich des Gehäuserandes 8 und größer als der Außendurchmesser im Bereich des Verbindungsbereichs 5.

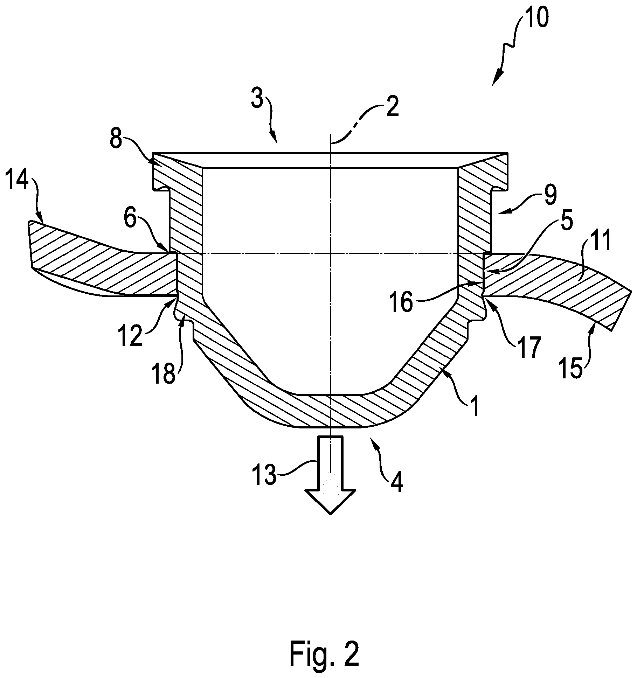

Figur 2 zeigt eine geschnittene Seitenansicht eines erfindungsgemäßen Fahrzeugbauteils 10 mit dem Gelenkgehäuse 1 gemäß Figur 1. Das Fahrzeugbauteil 10 weist ein Strukturbauteil 11 auf. Bei diesem Ausführungsbeispiel ist das Strukturbauteil 11 als ein Blechteil bzw. Flanschblech ausgebildet. Das Strukturbauteil 11 weist ein Durchgangsloch 12 auf. In das Durchgangsloch 12 ist das Gelenkgehäuse 1 gemäß Figur 1 in Einsetzrichtung gemäß Pfeil 13 eingesetzt worden. Gemäß der Einsetzrichtung 13 erfolgt das Einsetzen des Gelenkgehäuses 1 in das Durchgangsloch 12 mit dem Gehäuseboden 4 voran. Das Einsetzen des Gelenkgehäuses 1 wird beendet bzw. gestoppt, sobald das Anschlagselement 6 des Gelenkgehäuses 1 an dem Strukturbauteil 11 zur Anlage kommt. Hierbei liegt die Anschlagsfläche 7 des Anschlagselementes 6 gemäß Figur 1 auf einer ersten Seite 14 des Strukturbauteils 11 auf. Von der ersten Seite 14 und dem Anschlagselement 6 abgewandt weist das Strukturbauteil 11 eine zweite Seite 15 auf.

Das Durchgangsloch 12 bildet einen Rand 16 des Strukturbauteils 11. Der Rand 16 des Strukturbauteils 11 liegt an dem Verbindungsbereich 5 des Gelenkgehäuses 1 an. Hierbei bilden der Rand 16 und der Verbindungsbereich 5 einen gemeinsamen Kontaktbereich 17. Bei diesem Ausführungsbeispiel weist der Verbindungsbereich 5 in Bezug zum Innendurchmesser des Durchgangslochs 12 ein Übermaß auf. Somit wird das Gelenkgehäuse 1 in Einsetzrichtung 13 in das Durchgangsloch 12 eingepresst. Das Gelenkgehäuse 1 ist mittels einer Presspassung kraftschlüssig in dem Durchgangsloch 12 des Strukturbauteils 11 gehalten.

Nach dem Einsetzen des Gelenkgehäuses 1 in das Durchgangsloch 12 werden das Gelenkgehäuse 1 und das Strukturbauteil 11 im Kontaktbereich 17 stoffschlüssig miteinander verbunden.

Nachfolgend wird ein Sicherungselement 18 zum zusätzlichen Sichern des Gelenkgehäuses 1 an dem Strukturbauteil 11 hergestellt. Das Sicherungselement 18 ist einstückig mit dem Gelenkgehäuse 1 ausgebildet. Das Sicherungselement 18 ist im Bereich der von dem Anschlagselement 6 abgewandten zweiten Seite 15 des Strukturbauteils 11 angeordnet. Hierbei ist das Sicherungselement 18 als ein von der Außenumfangsfläche des Gelenkgehäuses 1 nach außen vorstehender Vorsprung bzw. Wulst ausgebildet. Das Sicherungselement 18 umläuft das Gelenkgehäuse 1 radial zur Mittellängsachse 2. Das Sicherungselement 18 ist mittels einer Umformung, insbesondere einer Materialanstauchung, gebildet. Das Sicherungselement 18 wirkt mit der zweiten Seite 15 des Strukturbauteils 11 zusammen. Der Außendurchmesser des Gelenkgehäuses 1 ist im Bereich des Sicherungselementes 18 größer als im Verbindungsbereich 5. Aufgrund des Zusammenwirkens des Anschlagselementes 6 und des Sicherungselementes 18 ist eine formschlüssige Verbindung des Gelenkgehäuses 1 mit dem Strukturbauteil 11 realisiert. Hierdurch ist zugleich eine zusätzliche Verliersicherung hergestellt. Während das Anschlagselement 6 eine formschlüssige Sicherung des Gelenkgehäuses 1 in Einsetzrichtung 13 realisiert, realisiert das Sicherungselement 18 eine formschlüssige Sicherung des Gelenkgehäuses 1 entgegen der Einsetzrichtung 13.

Alternativ zu dieser Reihenfolge kann nach dem Einsetzen des Gelenkgehäuses 1 in das Durchgangsloch 12 zunächst das Sicherungselement 18 realisiert und anschließend das Gelenkgehäuse 1 und das Strukturbauteil 11 im Kontaktbereich 17 stoffschlüssig miteinander verbunden werden. Hierbei kann jedoch die Schwierigkeit bestehen, dass das Sicherungselement 18 die Zugänglichkeit für das stoffschlüssige Verbinden behindert. Gegebenenfalls muss das Sicherungselement 18 in diesem Fall mindestens teilweise durchschweißt werden.

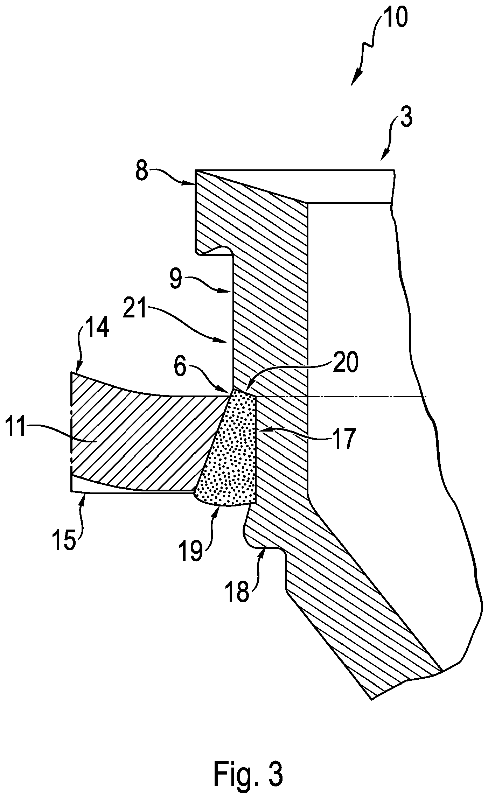

Figur 3 zeigt einen Ausschnitt aus der geschnittenen Seitenansicht des erfindungsgemäßen Fahrzeugbauteils 10 gemäß Figur 2. Im Kontaktbereich 17 ist eine stoffschlüssige Verbindung 19 hergestellt. Bei diesem Ausführungsbeispiel ist die stoffschlüssige Verbindung 19 mittels einer Schweißnaht realisiert. Im Einzelnen wird die stoffschlüssige Verbindung 19 mittels Laserschweißen realisiert. Hierzu wird die stoffschlüssige Verbindung 19 ausgehend von der zweiten Seite 15 des Strukturbauteils 11 als eine einseitig in den Kontaktbereich 17 eingebrachte Schweißnaht hergestellt. Ausgehend von der zweiten Seite 15 erstreckt sich die stoffschlüssige Verbindung 19 in Richtung des Anschlagselementes 6 und bis in das Anschlagselement 6 hinein. Somit wird der gesamte Kontaktbereich 17 zwischen dem Gelenkgehäuse 1 und dem Strukturbauteil 11 stoffschlüssig miteinander verbunden. Im Einzelnen werden hierbei gemäß Figuren 1 und 2 der Verbindungsbereich 5 des Gelenkgehäuses 1 mit dem Rand 16 des Durchgangslochs 12 sowie die Anschlagsfläche 7 des Gelenkgehäuses 1 mit der ersten Seite 14 des Strukturbauteils 11 stoffschlüssig miteinander verbunden, insbesondere verschweißt. Somit ist eine Schweißnahtwurzel 20 im Bereich des Anschlagselementes 6 angeordnet.

Der Gehäuserand 8, der Haltenutabschnitt 9 und ein dem Gehäuserand 8 zugewandter Abschnitt der ersten Seite 14 des Strukturbauteils 11 bilden eine Haltenut 21. Die Haltenut 21 dient zum Anordnen eines Randes eines hier nicht näher dargestellten Dichtungsbalgs.

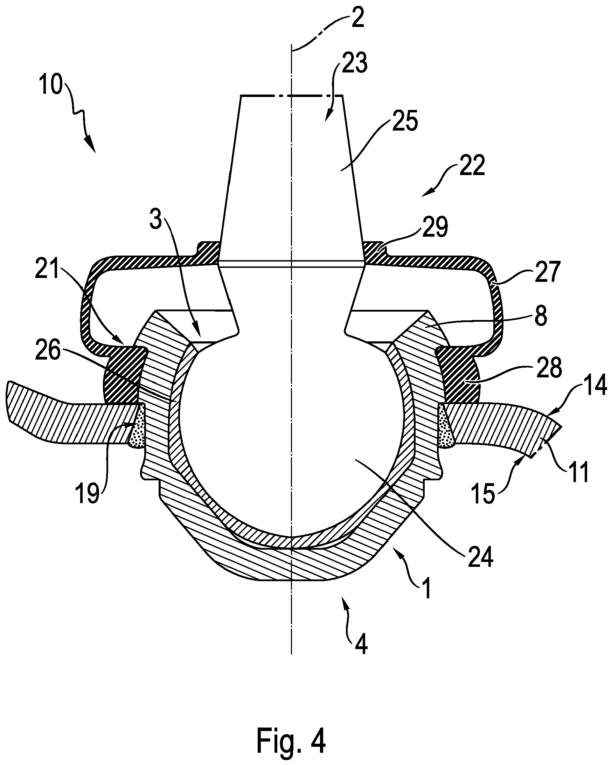

Figur 4 zeigt eine geschnittene Seitenansicht des erfindungsgemäßen Fahrzeugbauteils 10 gemäß Figuren 2 und 3 sowie mit einem Gelenk 22. Das Gelenk 22 ist bei diesem Ausführungsbeispiel als ein Kugelgelenk ausgebildet. Das Gelenk 22 weist ein Gelenkinnenteil 23 auf. Das Gelenkinnenteil 23 hat einen Lagerbereich 24. Der Lagerbereich 24 ist hier als eine Gelenkkugel ausgebildet. Des Weiteren ist der Lagerbereich 24 innerhalb des Gelenkgehäuses 1 angeordnet. Das Gelenkinnenteil 23 hat einen Gelenkzapfen 25, der sich aus der Gehäuseöffnung 3 heraus erstreckt. Bei diesem Ausführungsbeispiel ist das Gelenkinnenteil 23 als ein Kugelzapfen ausgebildet. Innerhalb des Gelenkgehäuses 1 ist eine Gelenkschale oder Lagerschale 26 angeordnet. Die Lagerschale 26 ist aus einem Kunststoff hergestellt. Bei diesem Ausführungsbeispiel wurde das Gelenkinnenteil 23 mit seinem Lagerbereich 24 in die Lagerschale 26 eingeschnappt. Anschließend wurde die Lagerschale 26 zusammen mit dem Gelenkinnenteil 23 in das Gelenkgehäuse 1 eingesetzt. Alternativ kann zunächst die Lagerschale 26 in das Gelenkgehäuse eingesetzt und anschließend das Gelenkinnenteil 23 in das Gelenkgehäuse 1 eingesetzt werden, wobei der Lagerbereich 24 in die Lagerschale 26 eingebracht wird.

Nach dem Einbringen des Gelenkinnenteils 23 ist der Gehäuserand 8 zum Verschließen des Gelenks 22 umgeformt bzw. eingerollt worden. Hierbei ist der Gehäuserand 8 nach innen in Richtung der Mittellängsachse 2 gebogen. Hierdurch ist der Lagerbereich 24 des Gelenkinnenteils 23 zuverlässig in dem Gelenkgehäuse 1 gehalten.

Anschließend wird ein Dichtungsbalg 27 über das Gelenkinnenteil 23 gestülpt und an dem Gelenkgehäuse 1 befestigt. Hierbei erstreckt sich der Dichtungsbalg 27 zwischen dem Gelenkgehäuse 1 und dem Gelenkinnenteil 23, wodurch die Gehäuseöffnung 3 abgedeckt ist. Dabei greift ein gelenkgehäuseseitiger Rand 28 des Dichtungsbalgs 27 in die Haltenut 21 ein. Zusätzlich oder alternativ kann der Rand 28 einen hier nicht näher dargestellten Spannring aufweisen. Des Weiteren ist der Dichtungsbalg 27 mit einem gelenkinnenteilseitigen Rand 29 dichtend an das Gelenkinnenteil 23 angelegt. Hierzu kann der Rand 29 einen hier nicht näher dargestellten Spannring aufweisen.

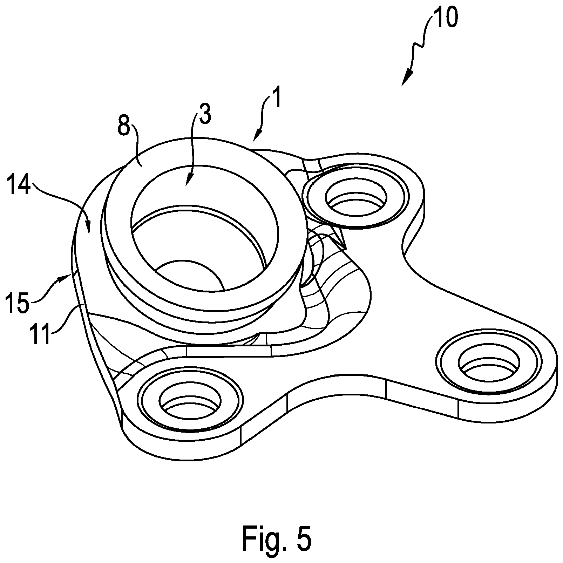

Figur 5 zeigt eine perspektivische Seitenansicht des erfindungsgemäßen Fahrzeugbauteils 10 gemäß Figuren 2 und 3. Für eine bessere Übersichtlichkeit ist das Gelenk 22 mit dem Gelenkinnenteil 23 und dem Dichtungsbalg 27 gemäß Figur 4 weggelassen. Mit dem Gelenk 22 bzw. dem Gelenkinnenteil 23 und dem Dichtungsbalg 27 bildet das Fahrzeugbauteil 10 gemäß diesem Ausführungsbeispiel ein Flanschgelenk.

### Bezuqszeichen

- 1: Gelenkgehäuse
- 2: Mittellängsachse
- 3: Gehäuseöffnung
- 4: Gehäuseboden
- 5: Verbindungsbereich
- 6: Anschlagselement
- 7: Anschlagsfläche
- 8: Gehäuserand
- 9: Haltenutabschnitt
- 10: Fahrzeugbauteil
- 11: Strukturbauteil
- 12: Durchgangsloch
- 13: Einsetzrichtung
- 14: erste Seite
- 15: zweite Seite
- 16: Rand
- 17: Kontaktbereich
- 18: Sicherungselement
- 19: stoffschlüssige Verbindung
- 20: Schweißnahtwurzel
- 21: Haltenut
- 22: Gelenk
- 23: Gelenkinnenteil
- 24: Lagerbereich
- 25: Gelenkzapfen
- 26: Lagerschale
- 27: Dichtungsbalg
- 28: Rand
- 29: Rand

## Patentansprüche

1. Verfahren zur Herstellung eines Fahrzeugbauteils (10), bei dem ein Gelenkgehäuse (1) in eine vorgegebene Einsetzrichtung (13) in ein Durchgangsloch (12) eines Strukturbauteils (11) eingesetzt wird, wobei das Einsetzen des Gelenkgehäuses (1) in das Durchgangsloch (12) in Einsetzrichtung (13) beendet wird, wenn ein Anschlagselement (6) des Gelenkgehäuses (1) an dem Strukturbauteil (11) anliegt, nach dem Einsetzen wird das Gelenkgehäuse (1) mit dem Strukturbauteil (11) stoffschlüssig verbunden, wobei das Gelenkgehäuse (1) mit seinem Gehäuseboden (4) voran in das Durchgangsloch (12) eingesetzt wird, und das Gelenkgehäuse (1) und das Strukturbauteil (11) mit mindestens einer Richtungskomponente entgegen der Einsetzrichtung (13) stoffschlüssig miteinander verschweißt werden, wobei das Gelenkgehäuse (1) und das Strukturbauteil (11) ausgehend von einer von dem Anschlagselement (6) abgewandten Seite (15) des Strukturbauteils (11) in Richtung des Anschlagselementes (6) miteinander stoffschlüssig verbunden werden, **dadurch gekennzeichnet, dass** nach dem Einsetzen des Gelenkgehäuses (1) in das Durchgangsloch (12) und nach dem stoffschlüssigen Verbinden des Gelenkgehäuses (1) mit dem Strukturbauteil (11) ein Sicherungselement (18) zum zusätzlichen Sichern des Gelenkgehäuses (1) an dem Strukturbauteil (11) an der Außenseite des Gelenkgehäuses (1) hergestellt wird, wobei das Sicherungselement (18) im Bereich einer von dem Anschlagselement (6) abgewandten Seite (15) des Strukturbauteils (11) angeordnet wird, und das Sicherungselement (18) als ein von einer Außenseite des Gelenkgehäuses (1) nach außen vorstehender Vorsprung ausgebildet wird.

2. Verfahren nach Anspruch 1, **dadurch gekennzeichnet, dass** das Gelenkgehäuse (1) und das Strukturbauteil (11) mit einer stoffschlüssigen Verbindung (19) miteinander gefügt werden, wobei sich die stoffschlüssige Verbindung (19), insbesondere eine Schweißnaht, ausgehend von einer von dem Anschlagselement (6) abgewandten Seite (15) des Strukturbauteils (11) bis in das Anschlagselement (6) hinein erstreckt.

3. Verfahren nach einem der vorhergehenden Ansprüche, **dadurch gekennzeichnet**, ein Kontaktbereich (17) des Gelenkgehäuses (1) mit dem Strukturbauteil (11) vollständig stoffschlüssig gefügt, insbesondere miteinander verschweißt, wird.

4. Verfahren nach einem der vorhergehenden Ansprüche, **dadurch gekennzeichnet, dass** die stoffschlüssige Verbindung (19) zwischen dem Gelenkgehäuse (1) und dem Strukturbauteil (11) mittels eines Strahlschweißverfahrens, insbesondere mittels Laserschweißen, hergestellt wird.

5. Verfahren nach einem der vorhergehenden Ansprüche, **dadurch gekennzeichnet, dass** das Anschlagselement (6) vor dem Einsetzen des Gelenkgehäuses (1) als eine von einer Außenseite des Gelenkgehäuses (1) nach außen vorstehende Stufe ausgebildet wird, insbesondere umläuft das Anschlagselement (6), vorzugsweise radial zu einer Mittellängsachse (2), das Gelenkgehäuse (1).

6. Verfahren nach einem der vorhergehenden Ansprüche, **dadurch gekennzeichnet, dass** das Gelenkgehäuse (1) beim Einsetzen in das Durchgangsloch (12) eingepresst wird.

7. Verfahren nach einem der vorhergehenden Ansprüche, **dadurch gekennzeichnet, dass** das Strukturbauteil (11) zwischen dem Anschlagselement (6) und dem Sicherungselement (18) formschlüssig gehalten und/oder geklemmt wird.

8. Verfahren nach einem der vorhergehenden Ansprüche, **dadurch gekennzeichnet, dass** das Sicherungselement (18), vorzugsweise radial zu einer Mittellängsachse (2), das Gelenkgehäuse (1) umläuft.

9. Verfahren nach einem der vorhergehenden Ansprüche, **dadurch gekennzeichnet, dass** eine Haltenut (21) zum Anordnen eines Randes (28) eines Dichtungsbalgs (27) zwischen einerseits dem Anschlagselement (6) und/oder einer an dem Anschlagselement (6) anliegenden Seite (14) des Strukturbauteils (11) und andererseits einem, insbesondere radial in Bezug zu einer Mittellängsachse (2), vorstehenden Gehäuserand (8) des Gelenkgehäuses (1) gebildet wird, vorzugsweise umläuft der Gehäuserand (8) eine Gehäuseöffnung (3) des Gelenkgehäuses (1).

10. Fahrzeugbauteil hergestellt mit einem Verfahren nach einem der vorhergehenden Ansprüche, wobei sich die stoffschlüssige Verbindung (19) zwischen dem Gelenkgehäuse (1) und dem Strukturbauteil (11) über den gesamten Kontaktbereich (17) zwischen dem Gelenkgehäuse (1) und dem Strukturbauteil (11) bis in das Anschlagselement (6) hinein erstreckt.

## Claims

1. Method for producing a vehicle component (10), in the case of which method a joint housing (1) is inserted in a predefined insertion direction (13) into a through hole (12) of a structural component (11), the insertion of the joint housing (1) into the through hole (12) in the insertion direction (13) being ended when a stop element (6) of the joint housing (1) bears against the structural component (11), the joint housing (1) being connected in an integrally joined manner to the structural component (11) after the insertion, the joint housing (1) being inserted with its housing bottom (4) at the front into the through hole (12), and the joint housing (1) and the structural component (11) being welded to one another in an integrally joined manner with at least one direction component counter to the insertion direction (13), the joint housing (1) and the structural component (11) being connected to one another in an integrally joined manner in the direction of the stop element (6), starting from a side (15) of the structural component (11), which side (15) faces away from the stop element (6), **characterized in that**, after the insertion of the joint housing (1) into the through hole (12) and after the connection of the joint housing (1) to the structural component (11) in an integrally joined manner, a securing element (18) for additionally securing the joint housing (1) on the structural component (11) is produced on the outer side of the joint housing (1), the securing element (18) being arranged in the region of a side (15) of the structural component (11), which side (15) faces away from the stop element (6), and the securing element (18) being configured as a projection which projects towards the outside from an outer side of the joint housing (1).

2. Method according to Claim 1, **characterized in that** the joint housing (1) and the structural component (11) are joined to one another by way of an integrally joined connection (19), the integrally joined connection (19), in particular a welded seam, extending as far as into the stop element (6) starting from a side (15) of the structural component (11), which side (15) faces away from the stop element (6).

3. Method according to either of the preceding claims, **characterized in that** a contact region (17) of the joint housing (1) is joined in an integrally joined manner completely to the structural component (11); in particular, they are welded to one another.

4. Method according to one of the preceding claims, **characterized in that** the integrally joined connection (19) between the joint housing (1) and the structural component (11) is produced by means of a beam welding method, in particular by means of laser welding.

5. Method according to one of the preceding claims, **characterized in that**, before the insertion of the joint housing (1), the stop element (6) is configured as a step which projects towards the outside from an outer side of the joint housing (1), and, in particular, the stop element (6) runs around the joint housing (1), preferably radially with respect to a centre longitudinal axis (2).

6. Method according to one of the preceding claims, **characterized in that**, during the insertion into the through hole (12), the joint housing (1) is pressed in.

7. Method according to one of the preceding claims, **characterized in that** the structural component (11) is held and/or clamped in a positively locking manner between the stop element (6) and the securing element (18) .

8. Method according to one of the preceding claims, **characterized in that** the securing element (18) runs around the joint housing (1), preferably radially with respect to a centre longitudinal axis (2).

9. Method according to one of the preceding claims, **characterized in that** a holding groove (21) for arranging an edge (28) of a sealing boot (27) is formed between firstly the stop element (6) and/or a side (14) of the structural component (11), which side bears against the stop element (6), and secondly a housing edge (8) of the joint housing (1), which housing edge (8) projects, in particular, radially in relation to a centre longitudinal axis (2), and the housing edge (8) preferably runs around a housing opening (3) of the joint housing (1).

10. Vehicle component produced by way of a method according to one of the preceding claims, the integrally joined connection (19) between the joint housing (1) and the structural component (11) extending as far as into the stop element (6) over the entire contact region (17) between the joint housing (1) and the structural component (11).

## Revendications

1. Procédé de fabrication d'un composant de véhicule (10), selon lequel un boîtier d'articulation (1) est inséré dans une direction d'insertion prédéfinie (13) dans un trou traversant (12) d'un composant structural (11), l'insertion du boîtier d'articulation (1) dans le trou traversant (12) dans la direction d'insertion (13) étant terminée lorsqu'un élément de butée (6) du boîtier d'articulation (1) s'applique sur le composant structural (11), le boîtier d'articulation (1) est relié par accouplement de matière avec le composant structural (11) après l'insertion, le boîtier d'articulation (1) étant inséré avec son fond de boîtier (4) en avant dans le trou traversant (12), et le boîtier d'articulation (1) et le composant structural (11) sont soudés l'un à l'autre par accouplement de matière avec au moins un composant directionnel à l'encontre de la direction d'insertion (13), le boîtier d'articulation (1) et le composant structural (11) étant reliés l'un à l'autre par accouplement de matière en partant d'un côté (15) du composant structural (11) détourné de l'élément de butée (6) dans la direction de l'élément de butée (6), **caractérisé en ce qu'**après l'insertion du boîtier d'articulation (1) dans le trou traversant (12) et après la liaison par accouplement de matière du boîtier d'articulation (1) avec le composant structural (11), un élément d'assujettissement (18) pour l'assujettissement supplémentaire du boîtier d'articulation (1) sur le composant structural (11) est produit sur le côté extérieur du boîtier d'articulation (1), l'élément d'assujettissement (18) étant agencé dans la zone d'un côté (15) du composant structural (11) détourné de l'élément de butée (6), et l'élément d'assujettissement (18) étant configuré sous la forme d'une protubérance faisant saillie vers l'extérieur à partir d'un côté extérieur du boîtier d'articulation (1) .

2. Procédé selon la revendication 1, **caractérisé en ce que** le boîtier d'articulation (1) et le composant structural (11) sont assemblés l'un à l'autre avec une liaison par accouplement de matière (19), la liaison par accouplement de matière (19), notamment un joint de soudage, s'étendant en partant d'un côté (15) du composant structural (11) détourné de l'élément de butée (6) jusque dans l'élément de butée (6).

3. Procédé selon l'une quelconque des revendications précédentes, **caractérisé en ce qu'**une zone de contact (17) du boîtier d'articulation (1) est entièrement assemblée par accouplement de matière avec le composant structural (11), notamment soudée.

4. Procédé selon l'une quelconque des revendications précédentes, **caractérisé en ce que** la liaison par accouplement de matière (19) entre le boîtier d'articulation (1) et le composant structural (11) est produite au moyen d'un procédé de soudage par faisceau, notamment au moyen d'un soudage laser.

5. Procédé selon l'une quelconque des revendications précédentes, **caractérisé en ce que** l'élément de butée (6) est configuré sous la forme d'un gradin faisant saillie vers l'extérieur à partir d'un côté extérieur du boîtier d'articulation (1) avant l'insertion du boîtier d'articulation (1), l'élément de butée (6) entourant notamment le boîtier d'articulation (1), de préférence radialement par rapport à un axe longitudinal médian (2).

6. Procédé selon l'une quelconque des revendications précédentes, **caractérisé en ce que** le boîtier d'articulation (1) est enfoncé dans le trou traversant (12) lors de l'insertion.

7. Procédé selon l'une quelconque des revendications précédentes, **caractérisé en ce que** le composant structural (11) est maintenu par accouplement de forme et/ou serré entre l'élément de butée (6) et l'élément d'assujettissement (18).

8. Procédé selon l'une quelconque des revendications précédentes, **caractérisé en ce que** l'élément d'assujettissement (18) entoure le boîtier d'articulation (1), de préférence radialement par rapport à un axe longitudinal médian (2).

9. Procédé selon l'une quelconque des revendications précédentes, **caractérisé en ce qu'**une rainure de maintien (21) est formée pour l'agencement d'un bord (28) d'un soufflet d'étanchéité (27) entre d'une part l'élément de butée (6) et/ou un côté (14) du composant structural (11) appliqué sur l'élément de butée (6) et d'autre part un bord de boîtier (8) du boîtier d'articulation (1) faisant saillie, notamment radialement par rapport à un axe longitudinal médian (2), le bord de boîtier (8) entourant de préférence une ouverture de boîtier (3) du boîtier d'articulation (1).

10. Composant de véhicule fabriqué par un procédé selon l'une quelconque des revendications précédentes, la liaison par accouplement de matière (19) entre le boîtier d'articulation (1) et le composant structural (11) s'étendant sur l'ensemble de la zone de contact (17) entre le boîtier d'articulation (1) et le composant structural (11) jusque dans l'élément de butée (6).
